# EUROPEAN PATENT SPECIFICATION

(11) **EP 4 156 003 B1**
(45) Date of publication and mention of the grant of the patent: **07.08.2024**
(21) Application number: 21199153.4
(22) Date of filing: 27.09.2021
(51) Int. Cl.: G06F 21/60, G06F 21/62, H04L 9/40

(54) **GRANTING ACCESS TO A COMPONENT OF A TECHNICAL SYSTEM**
GEWÄHRUNG VON ZUGRIFF AUF EINE KOMPONENTE EINES TECHNISCHEN SYSTEMS
OCTROI D'ACCÈS À UN COMPOSANT D'UN SYSTÈME TECHNIQUE

(43) Date of publication of application: 29.03.2023
(73) Proprietor: Siemens Aktiengesellschaft, 80333 München (DE)
(72) Inventor: Müller, Maximilian, 91052 Erlangen (DE); Shumaiev, Klym, 80798 München (DE)
(74) Representative: Siemens Patent Attorneys

(56) References cited:
- US-A1- 2008 256 458
- US-A1- 2013 117 860
- US-B1- 10 154 039

## Description

The present invention relates to a computer-implemented method and an apparatus for granting access for a user or an application to a component of a technical system. The invention is defined in the independent claims 1, 10 and 11.

Software engineering often relies on the reusability of software components developed by other software engineering teams. To enable such reusability, teams use some common systems for sharing their software components, further referred to as software components sharing platforms (SCSP). Depending on social, organizational, cultural, legal constructs the sharing of software components can be restricted. To enforce such restrictions most SCSPs enable the configuration of access rights. Such access rights can also have different levels of permission (e.g., read-only, read-write, owner). Building a software component depending on several other components can require access permission to all those components. Furthermore, implementing the required access permissions and/or resolving conflicts can become a tedious process. Often, general access rights are then granted, i.e., not adhering to the principle of least privileges, providing more access rights to a specific user account, or set of accounts than required.

Similarly, a usage, application, or provision of a physical or hardware component may depend on access to other software and/or hardware components. If the dependencies are hierarchically structured, granting the right access may not be straight forward if the principle of least privileges should be fulfilled. For example, physical access to hardware may require for example access to a security door for accessing a component/device, e.g., physical access areas or laboratories of buildings. However, this might result in granting access also to other components/devices that is not needed for application or provisioning of the component of interest.

US 2013/117860 provides a method for controlling access within a protected data environment of a computer environment wherein access is managed via an exception list comprising an Identifier stored within the protected data environment for granting user access of an unauthorized used.

It is therefore an objective of the present invention to easily provide access to a component of a technical system adhering to the least permission principle.

The objective is solved by the features of the independent claims. The dependent claims contain further developments of the invention.

The invention provides according to the first aspect computer-implemented method for granting access for a user or an application to a component of a technical system, wherein the technical system comprises a plurality of components, the method comprising the steps:
a) reading in a first data structure, wherein the first data structure comprises access permission levels assigned to each of the components of the technical system,
b) reading in access permission levels assigned to the user or to the application for accessing components of the technical system,
c) identifying a functional dependency of a given component on other components of the technical system, wherein the given component is predefined by the user or the application, and storing information about these identified components and the according functional dependency in a second data structure,
d) checking the second data structure against the first data structure depending on the functional dependency, wherein a component of the second data structure is selected for which the user or the application has an insufficient access permission level,
   and
e) modifying the respective access permission level of the user or the application to match with the access permission level of the selected component for granting access to the selected component.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables, in particular, for example, as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors, and other electronic devices for data processing.

Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can, by way of example, also be an IC (integrated circuit), in particular an FPGA (field programmable gate array) or an ASIC (application-specific integrated circuit), or a DSP (digital signal processor) or a graphics processor GPU (graphics processing unit). A processor can also be understood to mean a virtualized processor, a virtual machine or a soft CPU. It can, by way of example, also be a programmable processor that is equipped with configuration steps for carrying out the method according to embodiments of the invention or that is configured by means of configuration steps such that the programmable processor realizes the features according to embodiments of the invention for the method, the component, the modules or other aspects and/or sub-aspects of embodiments of the invention.

Within the context of embodiments of the invention, a "module" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention.

Within the context of embodiments of the invention, "assign", in particular in regard to data and/or information, can be understood to mean for example computer-aided assignment of data and/or information.

Within the context of embodiments of the invention, "provide", in particular in regard to data and/or information, can be understood to mean for example computer-aided provision. Provision is effected for example via an interface (e.g. a database interface, a network interface, an interface to a memory unit). This interface can be used for example to convey and/or send and/or retrieve and/or receive applicable data and/or information during the provision.

Within the context of embodiments of the invention, a "technical system" can be understood to mean for example a device, a machine, an industrial plant, or similar, comprising software and/or hardware components. A technical system can also be understood to mean a software repository, a software program, or an application. A technical system can also be understood to mean for example a physical structure, like a building comprising components like doors, security sectors, etc. In particular, the components of a technical system can be functionally dependent on each other, e.g., showing a hierarchical functional dependency. If a user or an application requests for example access to one of the components of the technical system, also access to other components may be required according to the functional dependency.

Within the context of embodiments of the invention, a "first data structure" can be referred to as an organizational model comprising information about access rights having different levels of permissions, e.g., "read-only", "read-write", "owner", etc., assigned to a component of the technical system. These access permission levels are preferably independent of an access permission level of a user or an application.

Within the context of embodiments of the invention, an "access to a component" can be understood to mean for example providing access to the component to use, apply, modify, or process the component. In case of software components, it can for example be understood to mean to build a software component. In case of hardware components, it can for example be understood to enter or physically access the component.

Within the context of embodiments of the invention, a "functional dependency" can be understood to mean for example a dependency of one component on another component. For example, for a software component, the functional dependency may be a software dependency, e.g., when a software is built. Furthermore, the functional dependency can also be understood as an access dependency, i.e., access to a component depends on access to another component. For example, in case of a physical component like a door to a room in a building, the access dependency can relate for example to access to the building itself.

Within the context of embodiments of the invention, a "predefining a component by the user or the application" and the like can be understood to mean for example using, storing, applying, requesting access to said component by the user or the application. For example, if a user wants to build a software component, the user may require access to other components, depending on the functional dependency.

Within the context of embodiments of the invention, a "modifying the respective access permission level of the user or the application" and the like can be understood to mean for example adapting, changing, updating, extending, and/or upgrading the access permission level of the user or the application to gain access to a component. For example, if a user has only "read-only" access, but a component requires "read-write" access, the access permission level of the user can be extended accordingly. In another example, if a user requires physical access to a component for example using a security token or smartcard, modifying the access permission level may involve updating cryptographic keys stored on the security token or smartcard. In another example, components like keys, tools or weapons might be bound to a specific role, such that modifying the access permission level may involve changing an assigned role.

It is an advantage of the invention to easily provide access to components of a technical system while ensuring that the least permission principle is adhered to.

Furthermore, the automatic process prevents blocking access for a user or an application. If an access permission level of a user or an application for accessing a component is insufficient, this is automatically determined.

Furthermore, permissions can be automatically removed ensuring the least permission principle.

According to a preferred embodiment of the invention, the second data structure may be configured as a directed acyclic graph.

This enables efficient determination of dependencies. Furthermore, this allows to detect and subsequently remove circular dependencies.

According to another embodiment of the invention, the functional dependency may be an access dependency.

According to another embodiment of the invention, the access permission levels assigned to each of the components in the first data structure may be hierarchically structured.

For example, the access permission levels of a software component can be "owner", "read-write", and "read-only", with the latter having the least access rights.

According to a preferred embodiment of the invention, the step of checking the second data structure against the first data structure depending on the functional dependency may comprise the following steps:
- determining at least one dependency path of the functional dependency stored in the second data structure and outputting the at least one dependency path comprising the components assigned to said dependency path,
- for each dependency path, checking the access permission level of each assigned component against the access permission level of the user or the application and returning a check result,
   and
- selecting an assigned component depending on the check result.

Preferably, all dependency paths are checked that way. This ensures for example that the least permission principle/ the principle of least privileges is adhered to.

According to another embodiment of the invention, wherein the dependency paths may be determined by means of a depth-first search.

This ensures efficient analysis of the dependencies. A depth-first search can be for example performed using a Depth-First-Search traversal algorithm.

According to a preferred embodiment of the invention, the components may be software components, and the functional dependency may be a functional software dependency.

According to another embodiment of the invention, the technical system may be a repository, and the components are stored therein.

The repository can for example comprise a plurality of software components which may be dependent on each other, i.e., when building one of the software components access to another software component of the repository may be required.

According to another embodiment of the invention, the functional software dependency of the given component on other components of the repository may be determined based on a program code comprising the given component.

According to another embodiment of the invention, the functional dependency may be identified using static code analysis.

A static code analysis technique allows to identify software dependencies among the relevant software components of a program code.

According to another embodiment of the invention at least one of the components may be a physical element of the technical system.

A physical element can be for example hardware of the technical system. For example, the physical element can be or can comprise a lock, an interface (e.g., a card reader), etc.

The invention provides according to a second aspect an apparatus for granting access for a user or an application to a component of a technical system, wherein the technical system comprises a plurality of components, the apparatus comprising:
a) an interface configured
   - to read in a first data structure, wherein the first data structure comprises access permission levels assigned to each of the components of the technical system,
      and
   - to read in access permission levels assigned to the user or to the application for accessing components of the technical system,
b) an analysis module configured to identify a functional dependency of a given component on other components of the technical system, wherein the given component is predefined by the user or the application, and to store information about these identified components and the according functional dependency in a second data structure,
c) a comparison module configured to check the second data structure against the first data structure depending on the functional dependency, wherein a component of the second data structure is selected for which the user or the application has an insufficient access permission level,
   and
d) an access module configured to modify the respective access permission level of the user or of the application to match with the access permission level of the selected component for granting access to the selected component.

The apparatus can preferably comprise at least one processor. The apparatus can for example be connected to the technical system to provide access permission management.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
- Fig. 1:: shows a first exemplary embodiment of the method for granting access for a user or an application to a component of a technical system;
- Fig. 2:: shows a first exemplary embodiment of the apparatus for granting access for a user or an application to a component of a technical system; and
- Fig. 3:: shows a second exemplary embodiment of the method for granting access for a user or an application to a component of a technical system.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively, and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

A combination according to embodiments of the invention of hardware (components) and software (components) can occur in particular if one portion of the effects according to embodiments of the invention is brought about preferably exclusively by special hardware (e.g. a processor in the form of an ASIC or FPGA) and/or another portion by the (processor- and/or memory-aided) software.

In particular, in view of the high number of different realization options, it is impossible and also not helpful or necessary for the understanding of embodiments of the invention to name all these realization options. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

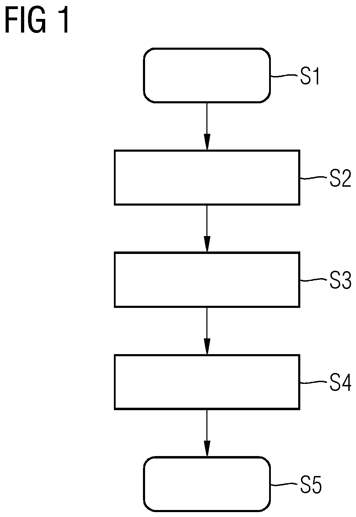

Fig. 1 shows a first exemplary embodiment of the invention. It shows a flow chart of the computer-implemented method for granting access for a user or an application to a component of a technical system. The technical system can for example comprise a plurality of software and/or hardware components which may be dependent on each other. A component may have a functional dependency on another component, wherein the functional dependency can for example be a software dependency and/or an access dependency. For example, when building a software component, this may require access to another software component due to dependencies between the software components. In another example, access to a component may require first access to another software or hardware component, e.g., requiring first a smartcard and second a password to open a door or to enter a security sector.

The method comprises the following steps:
In the first step S1 a first data structure is read in, wherein the first data structure comprises access permission levels assigned to each of the components of the technical system. In other words, for each component an access permission level is defined. For example, a component can have an assigned access permission level of "read-only". The access permission levels assigned to each of the components in the first data structure can be for example hierarchically structured.

In the next step S2 access permission levels assigned to the user or to the application for accessing components of the technical system is read in. For example, the user or the application can have only access rights "read-only" for all components. Alternatively, the access rights can be different for individual components. The access permission levels assigned to the user or the application can also be provided in a data format or structure.

In the next step S3 a functional dependency of a given component on other components of the technical system is identified. Then, information about these identified components and the according functional dependency are stored in a second data structure. The said component is preferably predefined by the user or the application. For example, said component is used, applied, modified, built, etc. by the user or the application, and therefore, access to said component is required.

For example, a user wants to build said component as part of a program code. The functional software dependency of the given component on other components of the repository can be determined based on the program code comprising the given component. The functional dependency can for example be identified using static code analysis.

In the next step S4 the second data structure is checked against the first data structure depending on the functional dependency, wherein a component of the second data structure is selected for which the user or the application has an insufficient access permission level. To this end, depending on the functional dependency, a component related to the given component is selected and the access permission level of this selected component is compared to the access permission level of the user or the application. The component selection is performed according to the functional dependency, i.e., the functional dependency can prescribe a checking/review sequence. For example, if a component A depends on B, while *B* depends on *C*, first the access permission level of component B is checked and subsequently the access permission level C.

This step S4 can preferably comprise the following sub-steps: At least one dependency path of the functional dependency stored in the second data structure is output. The dependency paths are determined by means of a depth-first search performed on the second data structure. The at least one dependency path comprises the components assigned to said dependency path. Then, for each identified dependency path, the access permission level of each assigned component is checked against the access permission level of the user or the application and a check result is returned. For example, for each dependency path and therein for each component, the access permission level of the user or the application is checked whether it is sufficient to access said component. A respective check result, e.g., "sufficient"/"insufficient" or "yes/no", is returned. Then, depending on the check result, the assigned component is selected. Preferably, only components for which the access permission level of the user or the application is insufficient are selected. These steps are preferably performed for all dependency paths of the second data structure and for all components assigned to each dependency path.

In the next step S5 the respective access permission level of the user or the application is modified to match with the access permission level of the selected component for granting access to the selected component. Preferably, the access permission levels of the user or the application to all selected components are modified after all relevant components have been selected.

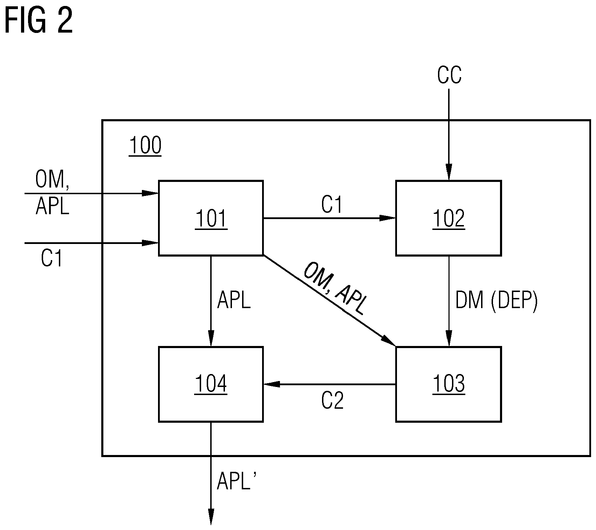

Figure 2 shows a first exemplary embodiment of the apparatus 100 for granting access for a user or an application to a component of a technical system. The technical system can comprise a plurality of hardware and/or software components. Access to a component of the technical system may dependent on for example access to another component.

The apparatus 100 comprises an interface 101, an analysis module 102, a comparison module 103, and an access module 104. The apparatus 100 can be implemented in software and/or hardware.

The interface 101 is configured to read in a first data structure OM, wherein the first data structure OM comprises access permission levels assigned to each of the components of the technical system. Furthermore, the interface 101 is configured to read in access permission levels APL assigned to the user or to the application for accessing components of the technical system.

The analysis module 102 is configured to identify a functional dependency DEP of a first component C1 on other components CC of the technical system, wherein the first component is for example selected by the user or the application as the component of interest, and to store information about these identified components and the according functional dependency in a second data structure DM. To this end, the analysis module 102 may read in information about the other components CC of the technical system in order to identify functional components between these components CC, C1. The second data structure DM is transmitted to the comparison module 103.

The comparison module 103 is configured to compare the second data structure DM with the first data structure OM depending on the functional dependency DEP, and to select based on said comparison a component C2 of the second data structure for which the user or the application has an insufficient access permission level APL. The selected component C2 and/or information about this selected component C2 is output by the comparison module 103.

The access module 104 is configured to modify the respective access permission level APL of the user or of the application to match with the access permission level of the selected component for granting access to the selected component. The access module 104 can for example output the modified access permission level APL'.

The apparatus can for example be connected to the technical system to enforce the modified access permission.

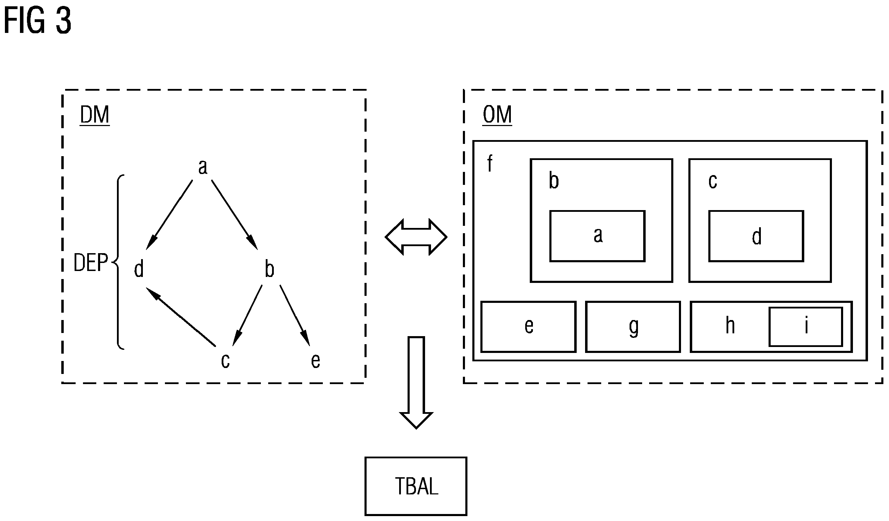

Figure 3 shows another exemplary embodiment of the computer-implemented method for granting access to a component of a technical system. The technical system can be for example a repository comprising a plurality of software components. Preferably, the method can be executed by an apparatus as shown in Figure 2. The apparatus can for example be integrated in the repository structure.

Using static code analysis, the software components' dependencies DEP on other software components published within the same repository can be determined. The dependencies DEP and the relevant components can be stored in a data structure, also referred to as a dependency model DM. The dependency model DM is preferably a directed acyclic graph. For example, a component *a* can depend on component *b* and *c* or *e.* Also, the component *a* can depend on component d.

Furthermore, the access permission levels, e.g., "read-only", "read-write", etc., of all components of the repository are determined and stored in a second data structure OM, also referred to as organizational model. Preferably, the access permission levels are hierarchically structured, e.g., access to a component *b* also comprises access to component *a*, while access to component *f* would comprise access to all other components as well.

The dependency model DM and the organizational model OM can be compared to determine whether a certain user account/set of user accounts is/are part of the respective organizational model OM and thus has/have all required permissions to build a respective software component. Such comparison can comprise the following steps:
1. Generating an empty data structure, e.g., a list TBAL, for storing information about access permissions of a user which need to be modified.
2. Determining all dependency paths of the dependency model using for example a Depth-First-Search traversal.
3. For each of the dependency paths, the access permission of each component assigned to this path is checked whether it matches the user's access permission level for said component. If the access permission does not match, then this component and/or an information about this component is included in the list TBAL. If the permission matches, then the next component is analyzed. If permission for a component is already granted due to access to another component because of the hierarchical structure of the access permission levels, the component is preferably not included in or removed from the list TBAL.
4. If the list TBAL is empty, a user has all required permissions, if not, the content can be used to either automatically or manually modify the access permission level of the user, e.g., to add the user to the required organizations.

For instance, a user wants to be able to build software component a, but this requires also access to components *b, c, d, e*. The user already has access to component *c.* Permission to group *f* must not be granted since it would also grant permissions to component *g, h, i* which would violate the least permission principle. With the above-mentioned method, it is assured that only the required permissions are granted to the user.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for granting access for a user or an application to a component of a technical system,
wherein the technical system comprises a plurality of components, the method comprising the steps:
a) reading in (S1) a first data structure (OM), wherein the first data structure comprises access permission levels assigned to each of the components of the technical system,
b) reading in (S2) access permission levels (APL) assigned to the user or to the application for accessing components of the technical system,
c) identifying (S3) a functional dependency (DEP) of a given component (C1) on other components of the technical system, wherein the given component is predefined by the user or the application, and storing information about these identified components and the according functional dependency (DEP) in a second data structure (DM),
d) checking (S4) the second data structure (DM) against the first data structure (OM) depending on the functional dependency (DEP), wherein a component (C2) of the second data structure is selected for which the user or the application has an insufficient access permission level, wherein
- at least one dependency path of the functional dependency stored in the second data structure is determined and the at least one dependency path comprising the components assigned to said dependency path is output, wherein the at least one dependency path is determined by means of a depth-first search,
- for each dependency path, the access permission level of each assigned component is checked against the access permission level of the user or the application, and a check result is returned,
and
- the component of the second data structure is selected (C2) depending on the check result,
and
e) modifying (S5) the respective access permission level (APL') of the user or the application to match with the access permission level of the selected component (C2) for granting access to the selected component.

2. Computer-implemented method according to claim 1, wherein the second data structure (DM) is configured as a directed acyclic graph.

3. Computer-implemented method according to one of the preceding claims, wherein the functional dependency (DEP) is an access dependency.

4. Computer-implemented method according to one of the preceding claims, wherein the access permission levels assigned to each of the components in the first data structure (OM) are hierarchically structured.

5. Computer-implemented method according to one of the preceding claims, wherein the components are software components, and the functional dependency is a functional software dependency.

6. Computer-implemented method according to one of the preceding claims, wherein the technical system is a repository, and the components are stored therein.

7. Computer-implemented method according to one of the preceding claims, wherein the functional software dependency of the given component on other components of the repository is determined based on a program code comprising the given component.

8. Computer-implemented method according to claim 7, wherein the functional dependency is identified using static code analysis.

9. Computer-implemented method according to one of the preceding claims, wherein at least one of the components is a physical element of the technical system.

10. Apparatus (100) for granting access for a user or an application to a component of a technical system, wherein the technical system comprises a plurality of components, the apparatus comprising:
a) an interface (101) configured
- to read in a first data structure (OM), wherein the first data structure comprises access permission levels assigned to each of the components of the technical system,
and
- to read in access permission levels (APL) assigned to the user or to the application for accessing components of the technical system
b) an analysis module (102) configured to identify a functional dependency of a given component (C1) on other components of the technical system, wherein the given component is predefined by the user or the application, and to store information about these identified components and the according functional dependency in a second data structure (DM),
c) a comparison module (103) configured to check the second data structure (DM) against the first data structure (OM) depending on the functional dependency, wherein a component of the second data structure is selected for which the user or the application has an insufficient access permission level, wherein
- at least one dependency path of the functional dependency stored in the second data structure is determined and the at least one dependency path comprising the components assigned to said dependency path is output, wherein the at least one dependency path is determined by means of a depth-first search,
- for each dependency path, the access permission level of each assigned component is checked against the access permission level of the user or the application, and a check result is returned, and
- the component of the second data structure is selected depending on the check result,
and
d) an access module (104) configured to modify the respective access permission level of the user or of the application to match with the access permission level of the selected component for granting access to the selected component.

11. Computer program product directly loadable into the internal memory of a digital computer, comprising software code portions for performing the method steps according to one of the claims 1 to 9 when said computer program product is run on a computer.

## Patentansprüche

1. Computerimplementiertes Verfahren zum Gewähren des Zugreifens für einen Benutzer oder eine Anwendung auf eine Komponente eines technischen Systems, wobei das technische System eine Vielzahl von Komponenten umfasst, wobei das Verfahren die folgenden Schritte umfasst:
a) Einlesen (S1) einer ersten Datenstruktur (OM), wobei die erste Datenstruktur Zugriffsberechtigungsstufen umfasst, die jeder der Komponenten des technischen Systems zugewiesen sind,
b) Einlesen (S2) von Zugriffsberechtigungsstufen (APL), die dem Benutzer oder der Anwendung für das Zugreifen auf Komponenten des technischen Systems zugewiesen sind,
c) Identifizieren (S3) einer funktionalen Abhängigkeit (DEP) einer gegebenen Komponente (C1) von anderen Komponenten des technischen Systems, wobei die gegebene Komponente durch den Benutzer oder die Anwendung vordefiniert ist, und Speichern von Informationen über diese identifizierten Komponenten und die entsprechende funktionale Abhängigkeit (DEP) in einer zweiten Datenstruktur (DM),
d) Prüfen (S4) der zweiten Datenstruktur (DM) gegen die erste Datenstruktur (OM) in Abhängigkeit von der funktionalen Abhängigkeit (DEP), wobei eine Komponente (C2) der zweiten Datenstruktur ausgewählt wird, für die der Benutzer oder die Anwendung eine unzureichende Zugriffsberechtigungsstufe hat, wobei
- mindestens ein Abhängigkeitspfad der in der zweiten Datenstruktur gespeicherten funktionalen Abhängigkeit bestimmt wird und der mindestens eine Abhängigkeitspfad mit den ihm zugeordneten Komponenten ausgegeben wird, wobei der mindestens eine Abhängigkeitspfad mittels einer Tiefensuche bestimmt wird,
- für jeden Abhängigkeitspfad die Zugriffsberechtigungsstufe jeder zugewiesenen Komponente mit der Zugriffsberechtigungsstufe des Benutzers oder der Anwendung verglichen und ein Prüfergebnis zurückgegeben wird,
und
- die Komponente der zweiten Datenstruktur in Abhängigkeit vom Prüfergebnis ausgewählt (C2) wird,
und
e) Ändern (S5) der jeweiligen Zugriffsberechtigungsstufe (APL') des Benutzers oder der Anwendung, damit sie mit der Zugriffsberechtigungsstufe der ausgewählten Komponente (C2) übereinstimmt, um den Zugriff auf die ausgewählte Komponente zu gewähren.

2. Computerimplementiertes Verfahren nach Anspruch 1, wobei die zweite Datenstruktur (DM) als ein gerichteter azyklischer Graph ausgebildet ist.

3. Computerimplementiertes Verfahren nach einem der vorhergehenden Ansprüche, wobei die funktionale Abhängigkeit (DEP) eine Zugriffsabhängigkeit ist.

4. Computerimplementiertes Verfahren nach einem der vorhergehenden Ansprüche, wobei die jeder der Komponenten in der ersten Datenstruktur (OM) zugewiesenen Zugriffsberechtigungsstufen hierarchisch strukturiert sind.

5. Computerimplementiertes Verfahren nach einem der vorhergehenden Ansprüche, wobei die Komponenten Softwarekomponenten sind und die funktionale Abhängigkeit eine funktionale Softwareabhängigkeit ist.

6. Computerimplementiertes Verfahren nach einem der vorhergehenden Ansprüche, wobei das technische System ein Repository ist und die Komponenten darin gespeichert sind.

7. Computerimplementiertes Verfahren nach einem der vorhergehenden Ansprüche, wobei die funktionale Softwareabhängigkeit der gegebenen Komponente von anderen Komponenten des Repository auf der Grundlage eines Programmcodes bestimmt wird, der die gegebene Komponente umfasst.

8. Computerimplementiertes Verfahren nach Anspruch 7, wobei die funktionale Abhängigkeit durch statische Codeanalyse identifiziert wird.

9. Computerimplementiertes Verfahren nach einem der vorhergehenden Ansprüche, wobei mindestens eine der Komponenten ein physikalisches Element des technischen Systems ist.

10. Vorrichtung (100) zum Gewähren von Zugriff auf eine Komponente eines technischen Systems für einen Benutzer oder eine Anwendung, wobei das technische System eine Vielzahl von Komponenten umfasst, wobei die Vorrichtung Folgendes umfasst:
a) eine Schnittstelle (101), die für Folgendes konfiguriert ist:
- Einlesen einer ersten Datenstruktur (OM), wobei die erste Datenstruktur Zugriffsberechtigungsstufen umfasst, die jeder der Komponenten des technischen Systems zugewiesen sind,
und
- Einlesen von Zugriffsberechtigungsstufen (APL), die dem Benutzer oder der Anwendung für den Zugriff auf Komponenten des technischen Systems zugewiesen sind
b) ein Analysemodul (102), das dafür ausgebildet ist, eine funktionale Abhängigkeit einer gegebenen Komponente (C1) von anderen Komponenten des technischen Systems zu identifizieren, wobei die gegebene Komponente durch den Benutzer oder die Anwendung vordefiniert ist, und Informationen über diese identifizierten Komponenten und die entsprechende funktionale Abhängigkeit in einer zweiten Datenstruktur (DM) zu speichern,
c) ein Vergleichsmodul (103), das ausgebildet ist, um die zweite Datenstruktur (DM) mit der ersten Datenstruktur (OM) in Abhängigkeit von der funktionalen Abhängigkeit zu überprüfen, wobei eine Komponente der zweiten Datenstruktur ausgewählt wird, für die der Benutzer oder die Anwendung eine unzureichende Zugriffsberechtigungsstufe hat, wobei
- mindestens ein Abhängigkeitspfad der in der zweiten Datenstruktur gespeicherten funktionalen Abhängigkeit bestimmt wird und der mindestens eine Abhängigkeitspfad mit den ihm zugeordneten Komponenten ausgegeben wird, wobei der mindestens eine Abhängigkeitspfad mittels einer Tiefensuche bestimmt wird,
- für jeden Abhängigkeitspfad die Zugriffsberechtigungsstufe jeder zugewiesenen Komponente mit der Zugriffsberechtigungsstufe des Benutzers oder der Anwendung verglichen und ein Prüfergebnis zurückgegeben wird,
und
- die Komponente der zweiten Datenstruktur in Abhängigkeit vom Prüfergebnis ausgewählt wird,
und
d) ein Zugriffsmodul (104), das ausgebildet ist, um die jeweilige Zugriffsberechtigungsstufe des Benutzers oder der Anwendung so zu ändern, dass sie mit der Zugriffsberechtigungsstufe der ausgewählten Komponente übereinstimmt, um den Zugriff auf die ausgewählte Komponente zu gewähren.

11. Computerprogrammprodukt, das direkt in den internen Speicher eines digitalen Computers geladen werden kann, mit Softwarecodeabschnitten zum Durchführen der Verfahrensschritte nach einem der Ansprüche 1 bis 9, wenn das Computerprogrammprodukt auf einem Computer ausgeführt wird.

## Revendications

1. Procédé mis en oeuvre par ordinateur pour accorder à un utilisateur ou à une application accès à un composant d'un système technique, dans lequel le système technique comprend une pluralité de composants, le procédé comprenant les stades :
a) mise en mémoire (S1) d'une première structure (OM) de données, la première structure de données comprenant des niveaux d'autorisation d'accès assignés à chacun des composants du système technique,
b) mise en mémoire (S2) de niveaux (APL) d'autorisation d'accès assignés à l'utilisateur ou à l'application pour accéder à des composants du système technique,
c) identification (S3) d'une dépendance (DEP) fonctionnelle d'un composant (C1) donné à d'autres composants du système technique, le composant donné étant défini à l'avance par l'utilisateur ou par l'application, et mise en mémoire de l'information sur ces composants identifiés et la dépendance (DEP) fonctionnelle en conséquence dans une deuxième structure (DM) de données,
d) contrôle (S4) de la deuxième structure (DM) de données par rapport à la première structure (OM) de données en fonction de la dépendance (DEP) fonctionnelle, dans lequel on sélectionne un composant (C2) de la deuxième structure de données, pour lequel l'utilisateur ou l'application a un niveau d'autorisation d'accès insuffisant, dans lequel
- on détermine au moins un chemin de dépendance de la dépendance fonctionnelle mise en mémoire dans la deuxième structure de données et on sort le au moins un chemin de dépendance comprenant les composants assignés audit chemin de dépendance, dans lequel on détermine le au moins un chemin de dépendance au moyen d'une recherche de première profondeur,
- pour chaque chemin de dépendance, on contrôle le niveau d'autorisation d'accès de chaque composant assigné au niveau d'autorisation d'accès de l'utilisateur ou de l'application, et on retourne un résultat du contrôle,
et
- on sélectionne (C2) le composant de la deuxième structure de données en fonction du résultat du contrôle,
et
e) on modifie (S5) le niveau (APL') d'autorisation d'accès respectif de l'utilisateur ou de l'application pour correspondre au niveau d'autorisation d'accès du composant (C2) sélectionné pour accorder un accès au composant sélectionné.

2. Procédé mis en oeuvre par ordinateur suivant la revendication 1, dans lequel on configure la deuxième structure (DM) de données sous la forme d'un graphe acyclique dirigé.

3. Procédé mis en oeuvre par ordinateur suivant l'une des revendications précédentes, dans lequel la dépendance (DEP) fonctionnelle est une dépendance d'accès.

4. Procédé mis en oeuvre par ordinateur suivant l'une des revendications précédentes, dans lequel on structure hiérarchiquement des niveaux d'autorisation d'accès assignés à chacun des composants dans la première structure (OM) de données.

5. Procédé mis en oeuvre par ordinateur suivant l'une des revendications précédentes, dans lequel les composants sont des composants logiciels et la dépendance fonctionnelle est une dépendance fonctionnelle logicielle.

6. Procédé mis en oeuvre par ordinateur suivant l'une des revendications précédentes, dans lequel le système technique est un gisement de données et les composants y sont mis en mémoire.

7. Procédé mis en oeuvre par ordinateur suivant l'une des revendications précédentes, dans lequel on détermine la dépendance fonctionnelle logicielle du composant donné ou à d'autres composants du gisement de données sur la base d'un code de programme comprenant le composant donné.

8. Procédé mis en oeuvre par ordinateur suivant la revendication 7, dans lequel on identifie la dépendance fonctionnelle en utilisant une analyse de code statique.

9. Procédé mis en oeuvre par ordinateur suivant l'une des revendications précédentes, dans lequel au moins l'un des composants est un élément physique du système technique.

10. Installation (100) pour accorder à un utilisateur ou à une application accès à un composant d'un système technique, dans laquelle le système technique comprend une pluralité de composants, l'installation comprenant :
a) une interface (101) configurée pour
- mettre en mémoire une première structure (OM) de données, la première structure de données comprenant des niveaux d'autorisation d'accès assignés à chacun des composants du système technique,
et
- mettre en mémoire des niveaux (APL) d'autorisation d'accès assignés à l'utilisateur ou à l'application pour accéder à des composants du système technique,
b) un module (102) d'analyse configuré pour identifier une dépendance fonctionnelle d'un composant (C1) donné à d'autres composants du système technique, le composant donné étant défini à l'avance par l'utilisateur ou par l'application, et mise en mémoire de l'information sur ces composants identifiés et la dépendance fonctionnelle en conséquence dans une deuxième structure (DM) de données,
c) un module (103) de comparaison configuré pour contrôler la deuxième structure (DM) de données par rapport à la première structure (OM) de données en fonction de la dépendance fonctionnelle, dans laquelle on sélectionne un composant de la deuxième structure de données, pour lequel l'utilisateur ou l'application a un niveau d'autorisation d'accès insuffisant, dans laquelle
- on détermine au moins un chemin de dépendance de la dépendance fonctionnelle mise en mémoire dans la deuxième structure de données et on sort le au moins un chemin de dépendance comprenant les composants assignés audit chemin de dépendance, dans lequel on détermine le au moins un chemin de dépendance au moyen d'une recherche de première profondeur,
- pour chaque chemin de dépendance, on contrôle le niveau d'autorisation d'accès de chaque composant assigné au niveau d'autorisation d'accès de l'utilisateur ou de l'application, et on retourne un résultat du contrôle,
et
- le composant de la deuxième structure de données est sélectionné en fonction du résultat du contrôle,
et
d) un module (104) d'accès configuré pour modifier le niveau d'autorisation d'accès respectif de l'utilisateur ou de l'application pour correspondre au niveau d'autorisation d'accès du composant sélectionné pour accorder accès au composant sélectionné.

11. Produit de programme d'ordinateur pouvant être chargé directement dans la mémoire interne d'un ordinateur numérique, comprenant des parties de code logiciel pour exécuter les stades du procédé suivant l'une des revendications 1 à 9, lorsque ledit produit de programme d'ordinateur passe sur un ordinateur.
